# EUROPÄISCHE PATENTSCHRIFT

(11) **EP 1 514 887 B1**
(45) Veröffentlichungstag und Bekanntmachung des Hinweises auf die Patenterteilung: **07.03.2007**
(21) Anmeldenummer: 04021207.8
(22) Anmeldetag: 07.09.2004
(51) Int. Cl.: C08G 69/20, C08G 63/82

(54) **Katalysatorlösung zur Durchführung der anionischen Lactampolymerisation, Verfahren zur deren Herstellung und Polyamidformmasse**
catalyst solution for anionic lactam polymerisation, process for the preparationthereof, and polyamide molding material
Solution de catalyseur pour la polmerisation anionique de lactames, procédé de sa préparation et matière moulable polyamide

(30) Priorität: 10.09.2003 DE 10341811
(43) Veröffentlichungstag der Anmeldung: 16.03.2005
(73) Patentinhaber: EMS-Chemie AG, 7013 Domat/Ems (CH)
(72) Erfinder: Schmid, Eduard, Dr. sc. nat., 7402 Bonaduz (CH); Hoff, Heinz, Dr. rer. nat., 7015 Tamins (CH); Rexin, Ornulf, Dr. rer. nat., 7013 Domat/Ems (CH)
(74) Vertreter: Pfenning, Meinig & Partner GbR

(56) Entgegenhaltungen:
- EP-A- 0 905 166
- EP-A- 1 266 925
- WO-A-00/58387
- WO-A-01/46293
- US-A- 2 782 231
- US-A- 3 896 052

## Beschreibung

Die Erfindung betrifft eine stark basische, klare und lagerstabile, bei Raumtemperatur flüssige Lösung eines Alkalisalzes von mit einer Monocarbonsäure amidiertem Anilin bzw. seinen Abkömmlingen in einem aprotischen Solvatisierungsmittel, ein Verfahren zu deren Herstellung sowie die mit dieser Lösung hergestellten Polyamide.

Für die beschleunigte, anionische Lactampolymerisation sind in jüngster Zeit verschiedene Entwicklungen bekannt geworden, die sog. Flüssigsysteme zur Auslösung der Lactampolymerisation benutzen. In der DE 196 03 305 C2 ist ein derartiges flüssiges Mehrkomponentensystem für die Durchführung der anionischen Lactampolymerisation beschrieben. Dieses System besteht im Wesentlichen aus Natriumcaprolactamat, das lactamacylierende Verbindungen sowie Solvatisierungsmittel enthält.

Es hat sich dabei gezeigt, dass derartige Systeme nur eine begrenzte Lagerfähigkeit aufweisen.

In der WO 01/46293 A1 ist ebenfalls ein Flüssigsystem beschrieben, das im Gegensatz zum System der DE 196 03 305 C2 lactamfrei ist. Dieses Flüssigsystem enthält dabei ein Umsetzungsprodukt von Isocyanat mit einer protischen Verbindung und einer Base in einem aprotischen Solvatisierungsmittel. Es hat sich gezeigt, dass diese Lösung zwar eine verbesserte Lagerstabilität gegenüber den bisher im Stand der Technik bekannten Lösungen aufweist, jedoch wurde bei diesen Flüssigsystemen festgestellt, dass sie stets eine Verfärbung in unterschiedlichem Ausmaß aufweisen. Ungünstig ist hierbei besonders, dass sich bei der Lagerung dieser Lösungen diese Verfärbung verstärkt und dann, wenn diese Lösung zum Einsatz kommt, es zu einer Verfärbung der hergestellten Polyamide kommen kann.

Die US-Patentschrift US 2,782, 231 beschreibt ein Verfahren zur Herstellung von Malonsäure und dessen Derivaten, wobei ein Alkalimetallderivat einer Verbindung aus der Gruppe von Acetanilid und substiuiertem Acetanilid verwendet wird.

Aus der US-Patentschrift US 3,896,052 ist eine Kombination von Katalysatoren zur Trimerisierung von Polyisocyanaten zu Polyisocyanuraten bekannt. Der Katalysator umfasst dabei ein Alkalimetallsalz eines n-substituierten Amides, eines Alkalimetallsalzes eines N-(2-Hydroxyphenyl)methylglycins und gegebenenfalls eines tertiären Amins.

Weiterhin ist in der EP 0 905 166 B1 ein Verfahren zur Herstellung von Polyamiden beschrieben, bei dem man in einem ersten Schritt mindestens ein Lactam einer anionischen Polymerisation unterwirft und dann das erhaltene Polymer, das eine Molmassenverteilung mit der ungefähren Form einer Gauss-Kurve mit einem Schweif bei hohen Massen aufweist, in einem zweiten Schritt einer Wärmebehandlung bei einer so hohen Temperatur und über einen so langen Zeitraum unterwirft, dass man eine unmodale Massenverteilung enthält.

Aus der WO 00/58387 ist ein Verfahren zur anionischen Polymerisation von Lactam bekannt, bei der eine Lösung eines Katalysators in eine Lactamschmelze zusammen mit Regulatoren, die aus der Gruppe aus Amiden ausgewählt sind, eingebracht wird. Der dabei verwendete Katalysator besteht aus einer Mischung aus einer Base und einem Lactam, Amid oder Bisamid.

Aus der WO 01/46293 ist zudem ein Flüssiginitiator zur beschleunigten Durchführung der anionischen Lactam-Polymerisation sowie ein Verfahren zu dessen Herstellung und dessen Verwendung bekannt.

Die Offenlegungsschrift EP 1 266 925 A1 betrifft Flüssigkatalysatoren für die Durchführung der anionischen Lactam-Polymerisation, wobei ein Umsetzungsprodukt aus einem Lactam, Isocyanat und einer Base enthalten ist, und das Umsetzungsprodukt in einem Solvatisierungsmittel gelöst ist. Ebenso wird ein Verfahren zur Herstellung des dort verwendeten Katalysators angegeben.

Ausgehend hiervon ist es daher die Aufgabe der vorliegenden Erfindung, ein verbessertes Flüssigsystem für die anionische Lactampolymerisation zur Verfügung zu stellen, was neben einer guten Lagerstabilität eine gleichbleibende, auch für die Dauer der Lagerung konstante Eigenfarbe aufweist. Das Flüssigsystem sollte weiterhin leicht herstellbar und umweltsicher sein. Eine weitere Aufgabe der Erfindung ist es, ein Verfahren zur Herstellung derartiger Systeme sowie die mit dem Flüssigsystem hergestellten Polyamide anzugeben.

Die Erfindung wird in Bezug auf das Flüssigsystem durch die Merkmale des Patentanspruchs 1 und im Bezug auf das Verfahren zur Herstellung der Lösung durch die Merkmale des Patentanspruchs 4, und in Bezug auf die Verwendung der Katalysatorlösung durch die Merkmale des Patentanspruchs 8 gelöst. Die Unteransprüche zeigen vorteilhafte Weiterbildungen auf.

Das erfindungsgemäße Flüssigsystem, nachfolgend als Katalysatorlösung bezeichnet, weist eine molare Konzentration von 0.3 bis 3.0 mol/Kg auf und enthält ein Alkalisalz von mit einer Monocarbonsäure amidiertem Anilin bzw. seinen Abkömmlingen in einem aprotischen Solvatisierungsmittel. Das erfindungsgemäß eingesetzte, amidierte Anilin bzw. seine Abkömmlinge kann auch durch die nachfolgende allgemeine Formel I beschrieben werden.

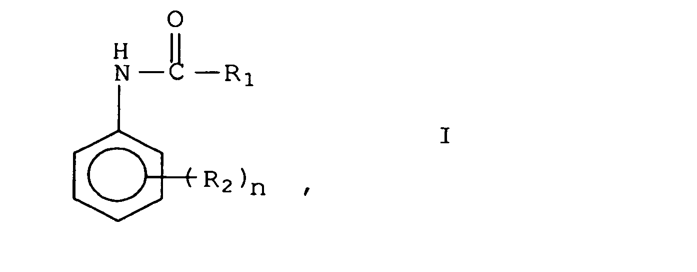

Bei der Verbindung der allgemeinen Formel I ist dabei R₁ H, ein aliphatischer, cycloaliphatischer oder aromatischer Rest mit 1 bis 12 C-Atomen, der keine Heteroatome oder Heterogruppen aufweist. Beim Rest R₁ sind insbesondere die bevorzugt, die bei der Amidbildung mit Essigsäure, Ameisensäure, Propionsäure sowie den Homologen der Cyclohexancarbonsäure und Benzoesäure entstehen. Der Rest R₂, der gleich oder verschieden sein kann, ist dabei ausgewählt aus H, Halogen, C1- bis C5-Alkyl, Ethoxy und Methoxy, n ist dabei 1, 2 oder 3. Bei den Halogenen kommen insbesondere Fluor, Chlor oder Brom in Frage. Entsprechende Abkömmlinge des Anilins sind wohlbekannte Verbindungen.

Als Solvatisierungsmittel (S) werden polare, aprotische Verbindungen ausgewählt aus N-Methylpyrrolidon, N-Octylpyrrolidon, N-Cyclohexylpyrrolidon, N-Octyl-caprolactam, Tetrabutylharnstoff oder Mischungen hiervon, eingesetzt.

Besonders bevorzugt ist die Lösung des Natrium- und des Kaliumsalzes von Acetanilid in N-Octylpyrrolidon (NOP) und Tetrabutylharnstoff (TBH) in einer molaren Konzentration von 0,3 - 3,0 mol/kg der Lösung. Insbesondere diese Katalysatorlösung weist eine überlegene Lagerzeitstabilität von ca. 12 Monaten auf, ohne dass sich die Eigenfarbe und ihre Aktivität wesentlich verändert.

Die erfindungsgemäße Lösung kann man so herstellen, dass man das zuvor als Feststoff hergestellte Alkalisalz einer Verbindung der allgemeinen Formel I direkt im Solvatisierungsmittel löst. Eine Herstellmethode für das dazu notwendige, feste Natriumsalz z.B. von Acetanilid ist beschrieben in WO 00/58378.

Überraschenderweise und im Gegensatz zu den bisherigen Kenntnissen hat es sich gezeigt, dass die Deprotonierung von z. B. Acetanilid, direkt in Lösung im beschriebenen Solvatisierungsmittel (S) unter Verwendung von z. B. Alkalimethylatlösung bei 30° bis 130° C, bevorzugt bei 50 bis 70 °C möglich ist. Überraschenderweise ist die Deprotonierung auch unter deutlich milderen Bedingungen ab einer Temperatur von 50° C durchführbar. Vorteilhaft ist dabei, dass keinerlei Zwischenprodukte isoliert werden müssen und direkt die erfindungsgemäße Lösung von guter Eigenfarbe gebildet wird. Als Base für die Deprotonierung kommen übliche dazu geeignete stark basisch wirkende Verbindungen in Frage, wie z. B. Natriumhydrid, metallisches Natrium, Natriumamid aber insbesondere die in der Technik für solche Reaktionen oft verwendete, 15 bis 40 %ige, insbesondere 30 %ige, Lösung von Natriummethylat in Methanol oder entsprechend auch eine methanolische Lösung von Kaliummethylat in Methanol.

Während man für die Deprotonierung von üblichem, aliphatischem Carbonsäureamid wie z.B. N-Dodecylacetat und Caprolactam eine Temperatur von mindestens 80°, aber insbesondere von 120 bis 130° C benötigt, hat es sich unerwarteterweise gezeigt, dass die Deprotonierung von Acetaniliden mit der üblichen Alkalimethylatlösung - Na, K - bereits, wie vorstehend ausgeführt, bei 50° und einem Druck von z.B. 10 bis 30 Torr gut durchführbar ist und dabei, im Gegensatz zur Deprotonierung von aliphatischem Carbonsäureamid, auch keinerlei Niederschlag auftritt.

Die erfindungsgemäße Lösung eignet sich insbesondere als Katalysator für anionische Polymerisationen wie z.B. von Lactonen, Lactamen sowie von doppelbindungshaltigen Monomeren.

Dabei liegt ein wesentlicher Vorteil im Vergleich zum Stand der Technik darin, dass sie eine bei Raumtemperatur lagerstabile, leicht handhabbare Flüssigkeit ist, die sich damit gut und rasch im Monomer verteilen lässt und dadurch die Polymerisation sehr gleichmäßig auslöst.

Im Vergleich zu den bekannten Feststoff-Lösungen von deprotoniertem Caprolactam, ist die erfindungsgemäße bei RT flüssige Lösung lagerstabil über Monate - ohne, dass Zusätze mitverwendet werden müssen - und ihre Empfindlichkeit gegenüber gelegentlichem Luftzutritt, also ihre Verschlackungsneigung, ist gering. Bei Zugabe in einem Molanteil von z.B. 0,3 bis 3,0 % zu flüssigem Lacton, wie z.B. Caprolacton oder auch zu doppelbindungshaltigem Monomer wird die anionische Polymerisationsreaktion bereits bei Raumtemperatur bei nachfolgend raschem Ablauf ausgelöst. Insbesondere aber für die Polymerisation von Lactamen eignet sich die erfindungsgemäße Lösung hervorragend.

Dabei kann sie allein, ohne Zugabe eines Beschleunigers, verwendet werden, was z.B. bei der Polymerisation von LC12 Vorteile bietet.

Die erfindungsgemäße Lösung eignet sich für kontinuierliche und für diskontinuierliche Polymerisationsprozesse. Wird sie z.B. in einem Monomergussprozess von LC12 verwendet, so kann ihre Zugabe zur Lactamschmelze z.B. bei 220° erfolgen, wodurch die nötige Zeit für die homogene Verteilung der Lösung in der Lactamschmelze gewährleistet ist. Danach kann die Temperatur angehoben werden, wodurch sich der Umsatz im gewünschten Maß beschleunigen lässt.

Speziell geeignet ist die Lösung ferner für die Herstellung von Verbundwerkstoffen, z.B. auf Basis von Glasrovinggewebe. Dabei enthalten die Rovings stets eine Schlichte, deren eine Komponente im Allgemeinen ein Silan ist, das z.B. die Isocyanat- oder auch die thermisch stabilere Isocyanuratstruktur zur Erreichung von Verträglichkeit zur Matrix enthalten kann. Umhüllt nun die mit Hilfe der erfindungsgemäßen Lösung basisch eingestellte Lactamschmelze solche speziell silanisierte Strukturen, so wird die anionische Lactampolymerisation ab diesen reaktiven und das Lactam direkt acylierenden Zentren - Isocyanat, Isocyanurat - beschleunigt ausgelöst, und, die Polylactamketten sind chemisch direkt an den Füllstoff fixiert.

Dieses neuartige Konzept ist natürlich auch für entsprechend silanisierte Füllstoffe jeder Art und ihre Kombination mit Glasfaserstrukturen geeignet.

Die erfindungsgemäße Lösung eignet sich aber auch hervorragend für kontinuierliche Polymerisationsprozesse, insbesondere von LC12, wie z.B. für die kontinuierliche Polymerisation auf einem Doppelwellenextruder, wie z.B. einer ZSK von Werner und Pfleiderer, Stuttgart.

Dabei kann von einer LC-Schmelze oder auch direkt von Lactam in Pillenform ausgegangen werden, die man dem Extrudereinzug zuführt. Während der Speisung des Extruders mit Lactamschmelze hat die kontinuierliche Zugabe und homogene Einmischung der erfindungsgemäßen Lösung in definiertem und konstantem Molanteil zu erfolgen, um die Polymerisation auszulösen und ablaufen zu lassen. Sie kann damit dem Lactam-Schmelzestrom, auch bereits in einem Intensivmischer vor der Dosierung in den Extruder, oder aber auch direkt im Einzugsteil des Extruders zugefügt werden. Selbstverständlich müssen sodann, für einen geeigneten Polymerisationsablauf, die dem Stand der Technik entsprechenden Maßnahmen getroffen werden. So sind z.B. die Temperatur der Schmelze und die Verweilzeit entsprechend anzupassen.

Relevanter Vorteil bei der Verwendung der erfindungsgemäßen Lösung ist, dass reines, keinerlei Zusätze enthaltendes, nicht voraktiviertes oder verändertes Lactam direkt verwendet werden kann und man über geeignete Zugabe der Lösung die Polymerisation direkt nach Maß auslösen kann. Dadurch sind auch die apparativen Maßnahmen wesentlich vereinfacht, denn es werden keinerlei beheizbare und inertisierbare Schmelzegefäße für Lactam für eine Aufbereitung (Katalysator und Aktivatorzugabe mit Zwischenlagerung) benötigt.

Insbesondere hat es sich aber gezeigt, dass sich die erfindungsgemäße Lösung gut für die Polymerisation von Lactamen und insbesondere von Lactam12 eignet. Ferner hat es sich gezeigt, dass interessante Modifikations- und Kombinationsmöglichkeiten bestehen.

So lässt sich z.B. die erfindungsgemäße Lösung über ausgewählte Zusätze in ihrer Anwendungsbreite wesentlich erweitern.

Zum Beispiel können der erfindungsgemäßen Lösung Stabilisatoren zugefügt werden, wobei Stabilisatoren welche die anionische Polymerisation von Lactam nicht oder nur unwesentlich beeinträchtigen und keine Verfärbung verursachen im Vordergrund stehen. Es hat sich gezeigt, dass dabei sogenannte HALS-Stabilisatoren bevorzugt verwendet werden, wie z.B. das sog. Nylostab S-EED der Fa. Clariant oder auch die HALS-Stabilisatoren der Fa. Ciba SC wie z.B. das Tinuvin 765 und das Tinuvin 770 oder auch Tinuvin 123 oder auch der Lichtstabilisator Tinuvin 312 und ausgewählte Mischungen von Beschleunigern mit Stabilisatoren. Dabei können Nylostab S-EED und Tinuvin 312 auch in ihrer depronierten Salzform mitverwendet werden, und man kann dabei die Deprotonierung auch gemeinsam mit dem Acetanilid direkt im Solvatisierungsmittel durchführen.

Zur Beeinflussung des Polymerisationsprozesses ist es auch möglich, ausgewählte Zusätze auch gemeinsam mit dem Lactam dem Extruder zuzuführen oder auch bereits vor dem Polymerisationsprozess in der Lactamschmelze zu lösen, wobei es sich z.B. um Beschleuniger und Stabilisatoren für das Polymer handeln kann.

Als Beschleuniger kommen dabei Isocyanat, Carbodiimid oder auch bereits acyliertes Lactam in Frage. Beispiele sind: Cyclohexylisocyanat, Phenylisocyanat, Tolylisocyanat, chloriertes Phenylisocyanat, Isophorondiisocyanat oder Dicyclohexylcarbodiimid.

Die erfindungsgemäße Lösung kann man auf vielfältige Weise in diskontinuierlichen Polymerisationsprozessen von Lactam einsetzen. Dabei wird die erfindungsgemäße Lösung dem Lactam z.B. in einem Molanteil von etwa 0,2 bis 3,0 Mol-% der aktiven Komponente, insbesondere dem Alkalisalz von Acetanilid zugesetzt. Falls die Rezeptur der Lösung und die Prozessbedingungen so gewählt sind, dass die Polymerisation langsam ausgelöst wird, kann man die Lösung z.B. in einem vorbestimmten Volumenanteil zufügen und einmischen und diese aktivierte Lactamschmelze sodann dem Formgebungsprozess zuführen. Dabei können diese Prozesse z.B. sein: Monomerguss, Rotationsguss, Schleuderguss, Tauch und Sprühprozesse und die Benetzung und Umhüllung von Faserstrukturen in einer Form mit nachfolgender Polymerisation zu Verbundwerkstoffteilen, wobei auch Kombinationen mit inerten Füllstoffen, wie Mineralien möglich sind. Dadurch können entsprechend dem bekannten Stand der Technik, im Gussteil gewünschte Eigenschaften wie erhöhte Steifigkeit, Bruchfestigkeit und Dimensionsstabilität erreicht werden. Solche Gussteile können sich somit hervorragend als hochwertige Konstruktionsteile, z.B. lasttragende Komponenten im Automobilbau, eignen. Dabei besteht die speziell interessante Möglichkeit, die Polylactammatrix direkt an den Füllstoff und die gewählte Faserverstärkungsstruktur chemisch anzukoppeln und damit das mechanische Verhalten und die Gebrauchsdauer solcher Anwendungskomponenten relevant zu verbessern. Dies erfolgt bevorzugt so, dass man für die Oberflächenbehandlung, z.B. des mineralischen Füllstoffes und bzgl. der Silankomponente bei der Glasfaser- und Rowingherstellung nach bekannter Technik neu ein Silan verwendet, welches eine acylierende Gruppe für Lactam, wie z.B. Isocyanat, -NCO oder die stabilere Isocyanuratform, enthält, wodurch die beschleunigte anionische Lactam-polymerisation der bereits basischen Lactamschmelze direkt angekoppelt an die Füllstoffoberfläche erfolgt. Bei dieser speziellen Prozessvariante fügt man die erfindungsgemäße Lösung der Lactamschmelze ohne den Beschleuniger zu, aber z.B. mitenthaltend Stabilisatoren und Farbgebungsmittel für das Polymer.

Ein geeigneter Füllstoff für den anionischen Gussprozess von Lactam ist z.B. Magnesiumhydroxid, das bei Beflammung eines Bauteils eine brandhemmende Wirkung ausübt.

Die Tatsache, dass man mit der erfindungsgemäßen Lösung eine katalytisch wirkende, lagerstabile Lösung verfügbar hat, die vielfältig modifiziert und den Verarbeitungsverfahren angepasst werden kann, eröffnet damit vielfältige und z. T. neue Möglichkeiten für neue Anwendungen und Produkteigenschaften. Bei Gussprozessen zur Verbundwerkstoffherstellung ist es ein relevanter Vorteil, dass man die Lactamschmelze zunächst mit reiner, katalytisch wirkender Lösung mischen kann, wobei sie bei geeigneter Temperatureinstellung zunächst nur langsam polymerisiert, so dass genügend Zeit für homogene und vollständige Benetzung jeder Art von Füll- und Verstärkungsstoff/Verstärkungsstrukturen in einer Form zur Verfügung steht, sodann aber nach Kontakt der Schmelze mit der aktivierenden Feststoffoberfläche direkt die beschleunigte Polymerisation unter direkter Ankoppelung der Polylactammatrix an die Struktur erfolgt.

Dies gilt auch für Sprüh- und Tauchprozesse, wobei man die Oberfläche der zu beschichtenden Komponente geeignet vorbehandeln und silanisieren muss. Silane für entsprechende Vorbehandlungen sind Stand der Technik. Es sind z.B. die Typen Silquest A 1310 mit der -NCO und Y 11597 mit der Isocyanuratgruppe als funktionelle und die Polymerisation beschleunigende, also das Lactam acylierende Gruppen. Solche Silane werden z.B. hergestellt durch die Fa. General Electric in CH 1217 Meyrin. Auch das Umsetzungsprodukt der NCO-Gruppe im Silan mit Lactam-6 ist als Degussa Silan SE 254 bereits beschrieben.

Damit eröffnen sich Verfahrensmöglichkeiten, indem man z.B. direkt Lactam z.B. als Schmelze mit katalytisch wirkender Lösung vormischen, sodann in einer Form vorbehandelten Füllstoff und/oder Faserstrukturen damit durchtränken kann, wonach die beschleunigte anionische Polymerisation ab der Füllstoffoberfläche abläuft und man die Polymerisation unter geeigneter Temperaturführung zu Ende führen kann.

Natürlich kann man die Möglichkeiten der Aktivierung für Gussprozesse auch kombinieren. So kann man eine zusätzlich geeignet aktivierte Lactamschmelze verwenden und gleichzeitig den Füllstoff und/oder die Glasfaserstrukturen mit Silan, enthaltend eine acylierende Funktion, silanisieren. Man gewährleistet dadurch, dass der gesamte PA12-Matrixanteil vollständig zum Polylactam umgesetzt wird und sie gleichzeitig an den Füllstoff angekoppelt ist.

Die erfindungsgemäße Lösung eignet sich insbesondere auch für die kontinuierliche Durchführung von Polymerisationsprozessen, z.B. von Lacton, aber insbesondere auch von Lactam im Extruder, z.B. in einem Doppelwellenextruder, z.B. den ZSK-Typen wie sie z.B. die Fa. Werner und Pfleiderer, Stuttgart, DE, herstellt und die vielfältige Verfahrensmöglichkeiten bieten.

Für die Polymerisation von LC12 kann man dabei dem Extruder LC12 in Pillenform kontinuierlich zuführen und dabei den Katalysator in eines der ersten Extrudergehäuse kontinuierlich zuführen, wobei das Lactam dann bereits als Schmelze oder noch als Feststoff vorliegen kann. Der Extruder kann jedoch auch direkt mit Lactamschmelze gespiesen werden, wobei man die Schmelze wieder bevorzugt in einem der ersten Extrudergehäuse mit dem Katalysator aktiviert. Es bestehen jedoch vielfältige Variationsmöglichkeiten für die Zugabe der Katalysatorlösung zur Lactamschmelze. So kann man der LC-Schmelze die Lösung bereits in einem vorgelagerten Verfahrensschritt zufügen, wobei eine homogene Einmischung angestrebt werden sollte. Dafür eignen sich z.B. sogenannte Static-Mixer, wie sie z.B. die Fa. Sulzer, Winterthur, bereitstellt oder auch mit einem Rotor versehene Mischköpfe wie sie z.B. die Fa. Dosiplast in Balzers, FL, herstellt. Verwendet man dabei die erfindungsgemäße Lösung und wählt man eine Temperatur der Schmelze von unter 230°, so läuft die Polymerisation zunächst so langsam ab, dass keine Gefahr einer wesentlichen Polymerisation bereits im Mischsystem zu erwarten ist. Man kann dann die Polymerisation des Lactams über Temperaturerhöhung beschleunigen und damit die nötige Verweilzeit in der Polymerisationszone des Extruders verkürzen.

Es ist jedoch auch möglich, eine Katalysator-Lösung, die bereits Aktivator und ggf. weitere Zusätze, wie z.B. Stabilisatoren, enthält, in einem vorgelagerten Verfahrensschritt mit der Lactamschmelze zu vermischen. Dabei sind jedoch die Anforderungen bzgl. homogener Vermischung und an die Verweilzeit bis zur Extruderspeisung höher, und insbesondere die Wahl der Verfahrensparameter, wie prozentuale Zudosierung der Lösung und die Temperaturführung sind höher und strikter einzuhalten.

Es gibt jedoch auch Ausführungsformen des Verfahrens, wo es verfahrensnotwendig und erwünscht ist, dass z.B. in den ersten Extrudergehäusen noch eine niederviskose Schmelze vorliegt. Dies ist z.B. dann der Fall, wenn Füllstoffe, wie z.B. Graphitteilchen oder auch geschnittene Graphitfaserrovings oder Glasfaserrovings oder feinteilige Mineralien oder Kombinationen davon homogen bei guter Benetzung in einer Polylactammatrix verteilt sein müssen. Bei solchen Verfahrensvarianten speist man z.B. den Extruder gleichzeitig mit der Katalysator-haltigen Lactamschmelze und mit den Zusatzstoffen und führt dabei die Temperatur, so dass zunächst die vollständige Benetzung der Zusatzstoffe mit der Lactamschmelze erfolgen kann und erhöht die Temperatur nachfolgend, so dass die Polymerisation im nötigen Maße beschleunigt wird. Man kann die Füllstoffe aber auch in einem der ersten Extrudergehäuse in die noch niederviskose und benetzungsaktive Lactamschmelze die bereits den Katalysator enthält, eindosieren.

Als Variante kann man der Schmelze auch nach erfolgter vollständiger Benetzung der Zusatzstoffe einen Aktivator, z.B. in gelöster Form, getrennt zuführen und die Polymerisation dadurch im nötigen Maße beschleunigen oder man kann auch den Katalysator allein oder mit dem Aktivator erst nach erfolgter Füllstoffbenetzung zufügen.

Bei allen diesen Prozessmöglichkeiten ist es selbstverständlich so, dass die gewählten Zusatzstoffe nach den Möglichkeiten des anionischen Polymerisationsprozesses geeignet ausgewählt sind und insbesondere trocken sein müssen, wobei man die Prozessschritte auch so weit wie möglich unter Schutzgas, z.B. in einer Stickstoffatmosphäre, durchführt.

Auch bei kontinuierlichen Polymersationsprozessen, z. B. in einer ZSK, ist es vorteilhaft dafür geeignete Füllstoffe die mit einem reaktiven Silan mit den Lactam-acylierenden, funktionellen Gruppen Isocyanat und Isocyanurat vorgehandelt sind, einzusetzen. Wird dabei eine katalysatorhaltige oder auch eine zusätzlich aktivatorhaltige Schmelze für die Polymerisation eingesetzt so ist zusätzlich zur Polymerisation der Matrix die chemische Ankoppelung des Füllstoffs gewährleistet.

Man kann also die kontinuierliche Polymerisation mit Zwangsförderung, z.B. im Extruder, unter Verwendung einer LC-Schmelze, die ausschließlich die Katalysator-Lösung enthält durchführen, aber auch unter Mitverwendung von Aktivator, der als Teil der Lösung mit verwendet wird, oder der auch später separat, zwecks beabsichtigter Beschleunigung des Polymerisationsverlaufs, z.B. nach einem erfolgten Benetzungsschritt, zugefügt wird. Natürlich können solche Prozessvarianten nach Bedarf auch geeignet kombiniert werden.

Man kann auch die resultierende Polylactamschmelze direkt weiteren Prozessschritten unterwerfen, etwa durch Zugabe einer Verbindung, welche die Aktivität und die Basizität des Katalysators gezielt aufhebt, und dadurch die Schmelze für weitere Verfahrensschritte stabilisiert, sowie durch Zugabe verwendungsbedingter Zusätze, wie z.B. Weichmacher, Antiflammmittel, Füll- und Verstärkungsstoffen, Fremdpolymer z.B. als Schlagzähmittel oder auch durch Kombination all dieser Zusätze. Weitere Zusatzstoffe sind die Verabreichung und die Stabilität (Hitze, Licht, Hydrolyse) und die Farbgebung und die Oberfläche beeinflussende Zusätze und natürlich Kombinationen aller beschriebenen Zusätze. Eine solche Schmelze kann sodann auch direkt der Formgebung, z.B. der kontinuierlichen Herstellung von Rohren, Profilen oder Ummantelungen zugeführt werden, auch in Kombination mit anderen Polymeren, z.B. zu Verbund- und Mehrschichtsystemen.

Das unter Verwendung der erfindungsgemäßen Katalysatorlösung hergestellte Polylactam zeichnet sich dabei durch eine bisher nicht bekannte Kombination von Eigenschaften aus. Dies ist dadurch bedingt, dass es frei ist von der bei Polyamid sonst üblichen Funktionalität (funktionellen Endgruppe) -COOH, die im Praxisgebrauch insbesondere die Hydrolysestabilität vermindert. Gleichzeitig besitzt es gezielt nur an einem Kettenende die funktionelle Gruppe, -NH₂. Unmittelbar nach erfolgter Polymerisation ist seine Schmelze entsprechend dem äquivalenten Anteil an zugefügter Katalysatorlösung stark basisch. Wird nun der Katalysator mit einem geeignten Neutralisationszusatz, bevorzugt im stöchiometrischen 1:1-Verhältnis zum Katalysator, neutralisiert, so ist seine Schmelze immer noch basisch, was hydrolysestabile Formulierungen über Rezepturzusätze erleichtert.

Insbesondere sind danach die NH₂-Gruppen weiterhin für vielfältige Matrixaufgaben verfügbar. So können reaktive SZ-Modifikatoren wie z. B. MA-gepfropfte Copolyolefine mit der Aminfunktion der Matrix reagieren ohne dass Vernetzung eintreten kann, wie es bei üblichem, hydrolytischem Polyamid, das z. B. mit üblichem Diamin wie Hexandiamin kettenlängengeregelt ist, leicht eintritt und dabei z. B. zu Stippenbildung führt.

Auch bei technischen Anwendungen wo Verbundhaftung notwendig ist, wie z. B. in Mehrschichttreibstoffsystemen in Kombination mit Fremdpolymer, eignet sich diese neuartige Polyamid-Matrix hervorragend, indem die Aminogruppen die notwendige Haftung herbeiführen, wobei aber gleichzeitig Vernetzungseffekte unterbunden werden, weil ein Kettenende nicht reaktiv ist.

Auch durch die beschriebene Möglichkeit zur Mitverwendung von Aktivatoren nach Wahl können gezielt die Matrixeigenschaften an die Praxisbedürfnisse angepasst werden.

Wird dabei z. B. ein Monoisocyanat als Beschleuniger in stöchiometrischem Anteil zum Katalysator mitverwendet, so resultieren Polyamidketten praktisch ohne funktionelle Endgruppen, die gut fließfähig sind und keine Nebenreaktionen, welche die Matrixeigenschaften wesentlich beeinflussen können, eingehen. Ist der Aktivator polyfunktionell, z. B. ein Di- oder auch ein Tri-Isocyanat, so sind hohe Molekulargewichte oder auch verzweigt Polylactamketten leicht und reproduzierbar herstellbar. Es können somit bei Verwendung der erfindungsgemäßen Katalysatoren gezielt gewünschte Matrixeigenschaften nach Wahl bereitgestellt werden, und der resultierenden Matrix bei geeigneter Rezeptierung zu speziell hydrolyse- und bewitterungsstabilen Eigenschaften verhelfen.

Die Erfindung soll nun anhand von Beispielen beschrieben werden. Die mit * gekennzeichneten Beispiele stellen dabei keine Ausführungsformen der Erfindung dar, sondern dienen zur Erleichterung des Verständnisses der Erfindung.

In den Beispielen bedeuten:

| Abkürzung | Bezeichnung |
|---|---|
| Na | Natrium |
| AA | Acetanilid |
| NaAA | Natriumacetanilid |
| S | Solvatationsmittel |
| NOP | n-Octylpyrrolidon |
| NMP | n-Methylpyrrolidon |
| DMEU | Dimethylethylharnstoff |
| TBH | Tetrabutylharnstoff |
| NaOMe | Natriummethylat, als 30 %ige Lösung in Methanol |
| MeOH | Methanol |
| Cyl | Cyclohexylisocyanat |
| DCC | Dicyclohexylcarbodiimid |
| S 7000 | Stabilisator 7000 (Fa. Raschig), Bis(2,6-diisopropylphenyl)carbodiimid |
| ID | Isophorondiisocyanat |
| CLo-6 | Caprolacton |
| CLa-6 | Caprolactam |
| LC-12 | Laurinlactam |
| Konzentration c | berechnete Konzentration Katalysator im Solvatationsmittel in mol/kg. |
| Molverhältnis | molare Verhältnis der verwendeten Edukte |
| t | Polymerisationsdauer in min. |
| T | Polymerisationstemperatur in °C |
| Pₙ | Berechneter Polymerisationsgrad |
| Extrakt | der mit siedendem Methanol extrahierbare Restanteil an nicht umgesetztem Lactam in Gew.% |
| ηᵣₑₗ | relative Lösungsviskosität des Polylactams, gemessen als 0,5 %ige Lösung in m-Kresol |
| Tu | Zeit, nach der die Viskosität der aktivierten Lactamschmelze derart ansteigt, dass ein Magnetrührer zum Stillstand kommt. Der Viskositätsanstieg ist ein Maß für das Kettenwachstum. |
| Irgacore L190 | eine trifunktionelle, cyclische Carbonsäure mit 6 N-Atomen im Molekül (Ciba SC) |

### Vergleichsbeispiel

### Synthese von Natrium-N-Dodecylacetamid in NOP

In eine gut getrocknete und mit Stickstoff inertisierte Apparatur wurden bei Raumtemperatur 866,32 g N-Octylpyrrolidon vorgelegt und anschließend 247,87 g N-Dodecylacetamid in mehreren Portionen zugegeben. Die entstandene Lösung wurde sodann auf 65 °C erwärmt. Nach Reduktion des Druckes auf 60 mbar wurden innerhalb von 60 Minuten 186,26 g einer 30%igen NaOMe-Lösung zugetropft und das freigesetzte Methanol kontinuierlich abdestilliert. Während der Zugabe nahm die Viskosität der Lösung zu und Niederschlagsbildung setzte ein. Nach der vollständigen Zugabe der NaOMe-Lösung wurde der Druck auf 10 mbar gesenkt und die Reaktionsmischung für eine Stunde bei diesem Druck gerührt. Der hell-orangebraune Niederschlag ging dabei nicht in Lösung. Nach dem Aufheizen der Reaktionsmischung auf 130-137 °C löste sich der Niederschlag vollständig auf. Das Vakuum wurde gebrochen und der Ansatz abgekühlt, wobei die Lösung niederschlagsfrei blieb. Nach einer Lagerung von 60 Stunden bei Raumtemperatur begann erneut ein Niederschlag aus der Lösung auszufallen, der aber durch eine Temperaturerhöhung auf 50 °C wieder vollständig gelöst werden konnte.

### Beispiel 1-10: Synthese von Natriumacetanilid NaAA

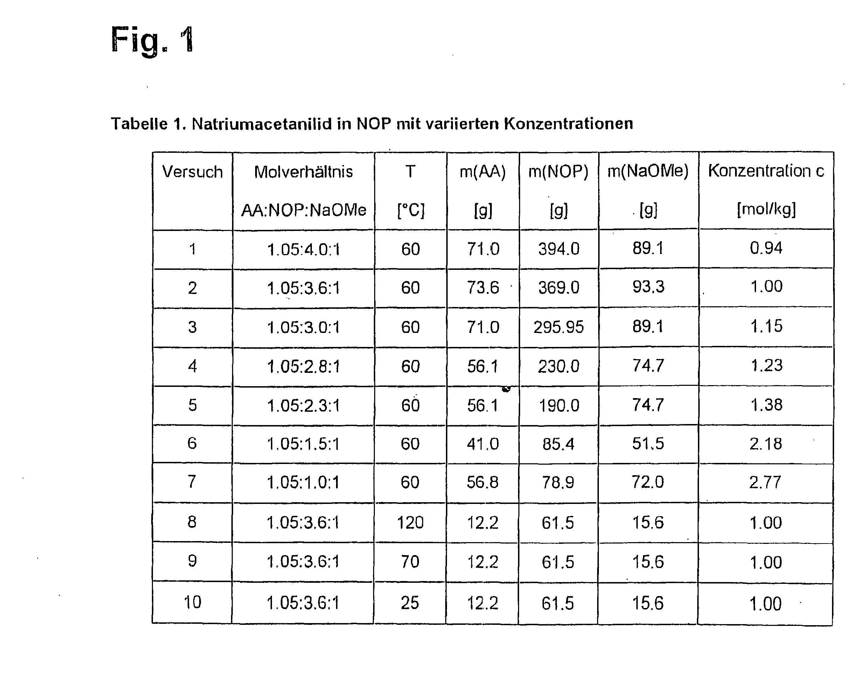

Die Beispiele 1-10 in Tab. 1 (Fig. 1) beschreiben die Herstellung des Flüssigkatalysators NaAA direkt im Solvatationsmittel NOP.

In den Beispielen wurde immer Acetanilid AA im Lösungsmittel NOP gelöst und mittels Natriummethylat NaOMe quantitativ deprotoniert. Das Verhältnis AA:NaOMe wurde 1.05:1 gewählt, wobei AA im geringen Überschuss eingesetzt wurde. Das Verhältnis AA/S wurde in einem Bereich von 1:4.0 bis zu 1:1.0 gewählt, wobei die Viskosität bei niedrigerem Lösungsmittelgehalt deutlich zunahm. Die Konzentration c stieg entsprechend von 0.94 auf 2.77 mol/kg. Je nach Anwendung kann die Viskosität des Katalysators auf diesem Wege gesteuert werden.

Die Versuche zur Synthese von NaAA sind in Tab. 1 zusammengefasst. Zur Herstellung wurden das Reaktorsystem und die Edukte sorgfältig von Wasser- und Sauerstoffspuren befreit. Unter Inertgas wurde zunächst das Acetanilid im Lösungsmittel NOP unter Rühren bei einer Sumpftemperatur von 60 °C gelöst. Anschließend wurde Natriummethylat (30 % Lösung in Methanol) zugetropft und gleichzeitig kontinuierlich Methanol bei 160 mbar abdestilliert. Anschließend verringerte man das Vakuum auf 60 mbar für weitere 2 Stunden. Je nach Ansatzgröße musste die Vakuumzeit so angepasst werden, dass das Restmethanol vollständig entfernt war. Nach dem Abkühlen auf Raumtemperatur erhielt man das deprotonierte Produkt Natriumacetanilid in NOP als klare, farblose bis leicht gelbliche Lösung.

Die Synthese von NaAA in NOP konnte ohne besondere Maßnahmen in größeren Ansätzen von 40, 50 und 100 kg durchgeführt werden. Die Reaktionsdauer musste aufgrund des kleineren Oberfläche/Volumen-Verhältnisses im größeren Reaktorgefäß verlängert werden.

Es hat sich gezeigt, dass die Farbe des Katalysators entscheidend von der Reaktionstemperatur abhängt, bei der die Deprotonierung durchgeführt wird. Je höher die Temperatur gewählt wurde, desto dunkler war die Eigenfarbe des Produktes (Beispiel 8 und 9). Die optimale Reaktionstemperatur liegt bei ca. 60 °C, das Produkt besitzt einerseits eine gute Farbe mit einer Farbzahl nach Gardner von etwa 5 Einheiten, andererseits ist die Destillation des Methanol noch gut möglich. Bei Temperaturen unter 60 °C verläuft die Deprotonierung langsam und benötigt viel Zeit. Beispiel 10 zeigt die Reaktion bei Raumtemperatur, hier gelang die Deprotonierung nicht, die Aktivierungsenergie war offensichtlich nicht ausreichend.

### Beispiel 11-17: Natriumacetanilid in verschiedenen Lösungsmitteln

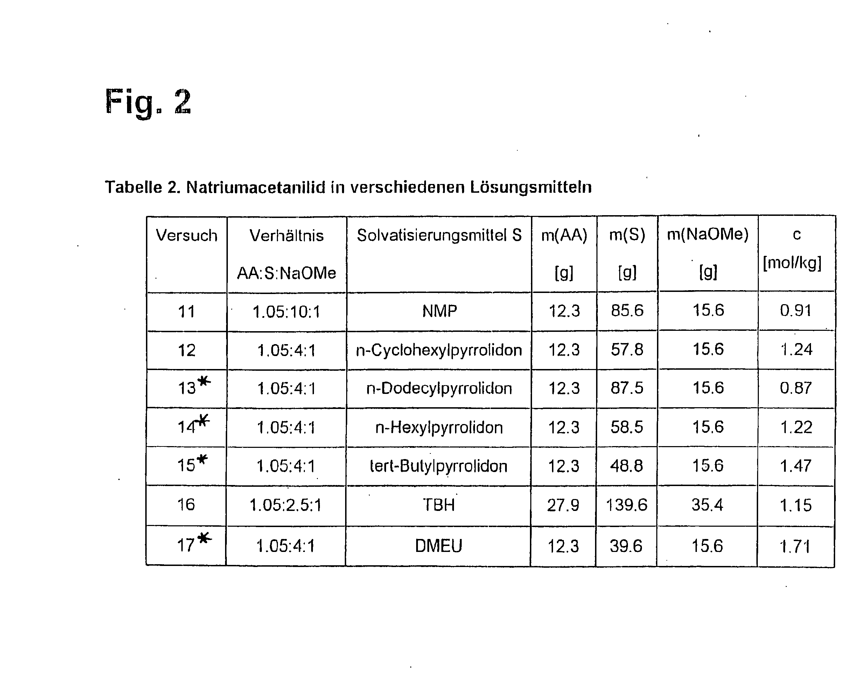

Die Beispiele 11-17 in Tab. 2 (Fig. 2) beschreiben die Synthese von NaAA in verschiedenen Solvatationsmitteln, und zwar in den Pyrrolidonen NMP, n-Cyclohexylpyrrolidon, n-Dodecylpyrrolidon, n-Hexylpyrrolidon und tert-Butylpyrrolidon und in den Harnstoffen DMEU und TBH. Die Synthesen wurden analog Beispiel 1 durchgeführt. AA wurde jeweils im betreffenden Solvatationsmittel gelöst und Na⁺OMe⁻ zugetropft, wobei das dabei entstehende Methanol im Vakuum abdestilliert wurde. Das AA wurde wieder in geringem Überschuss eingesetzt. Die Katalysatoren wurden alle als klare, farblose bis braune Lösung erhalten.

### Beispiele 18-24: Polymerisation von NaAA mit verschiedenen Aktivatoren

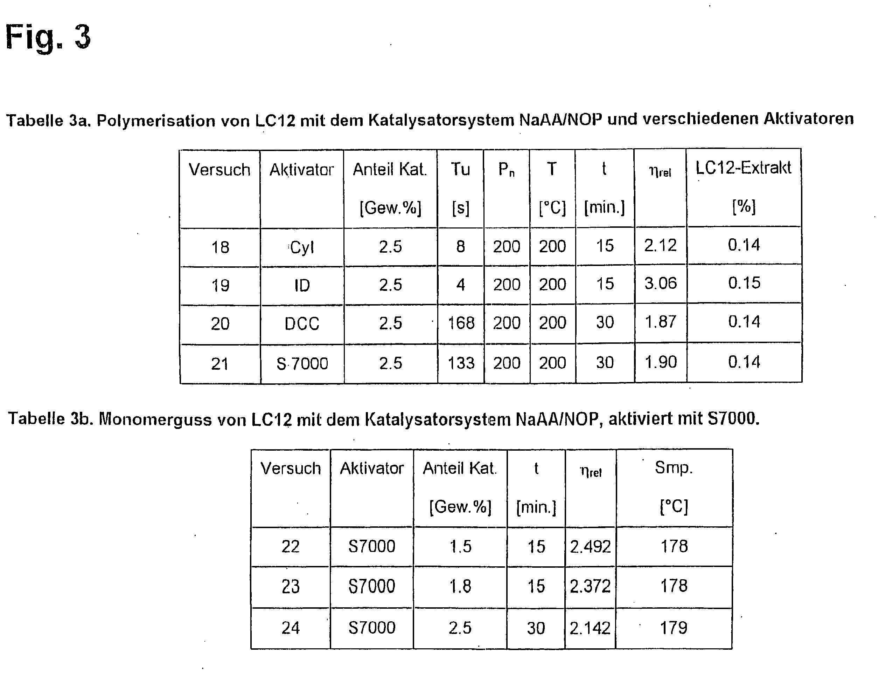

Die Beispiele 18-21 sind in Tab. 3a (Fig. 3) aufgeführt und beschreiben die Polymerisation von Lactam-12 mit NaAA in NOP aktiviert mit verschiedenen Aktivatoren, wobei das Verhältnis Katalysator/Aktivator immer 1:1 betrug. Alle Polymerisationen wurden unter den gleichen Bedingungen durchgeführt.

Man konnte bei allen Katalysator-Aktivator-Mischungen eine mehr oder weniger starke Verfärbung von farblos nach braun beobachten, die im Falle S7000 sehr deutlich und schnell verlief. Es hat sich gezeigt, dass Polymerisate mit optimaler Farbe erhalten werden konnten, wenn die betreffende Mischung erst kurz vor der Polymerisation hergestellt wurde.

Untersuchungen der Lagerstabilität von NaAA in NOP im Vergleich zum mit CyI aktivierten System zeigten eine deutlich bessere Stabilität. Nach 2 Monaten veränderte sich die Tu-Zeit nicht, sowohl bei Lagerung unter Inertgas in der Dunkelheit als auch bei regelmäßigem Sauerstoffkontakt am Licht. Die Farbzahl nach Gardner blieb mit 5.4 konstant.

Das mit CyI aktivierte Katalysatorgemisch dagegen wies nach derselben Zeit eine Tu-Zeit auf, die das 2- bis 3-fache des Anfangswertes betrug. Die Farbe verschlechterte sich beim aktivierten Katalysatorsystem schneller, die Farbzahl nach Gardner stieg im gleichen Zeitraum ohne Aktivator von 5.4 auf 6.2 Einheiten, mit Aktivator von 5.6 auf 8.7 Einheiten.

Zur Bestimmung der Tu-Zeit wurde in einem Erlenmeyerkolben unter trockener Inertgasatmosphäre LC12 aufgeschmolzen und mit einem Magnetrührer gerührt. Nach Zugabe des Katalysators wurde die Zeit gemessen bis die Kraft des Rührerantriebs nicht mehr ausreicht, um den Rührstab in Rotation zu halten.

Für die Bestimmung von ηᵣₑₗ und LC12-Extrakt wurde in einem beheizten Glasrohr unter denselben Bedingungen wie beim Tu-Test LC12 bis zu vollständigem Umsatz auspolymerisiert. Aus dem Polymerisat konnten Proben in Form von Bohrspänen entnommen und analysiert werden.

Der Polymerisationsgrad Pₙ wurde durch das Verhältnis Monomer/Katalysator auf 200 eingestellt, die Temperatur betrug 200 °C. Man erkennt, dass die Katalysator/Aktivatormischungen der Beispiele 18 und 19 mit Tu-Zeiten von 8 bzw. 4 s sehr aktiv waren und hohe Polymerisationsgeschwindigkeiten erreichten, während in den Beispielen 20 und 21 mit 168 s und 133 s die Polymerisation deutlich langsamer einsetzte. Aus diesen Zeiten, die die Aktivität der Katalysatoren charakterisieren, wurden die Bedingungen für Polymerisationen mit 100%igem Umsatz abgeleitet. Daher wurden die Polymerisationszeiten für die langsamen Systeme in Beispiel 20 und 21 länger gewählt. Die Polymerisate in Beispiel 18 und 19 wiesen hohe relative Viskositäten von 2.12 bzw. 3.06 auf, in den Beispielen 20 und 21 wurden Werte von 1.87 und 1.90 erreicht. Alle Polymere besaßen LC-12-Extraktwerte von ca. 0.14 Gew.%. Insbesondere der Einsatz des bifunktionelle Aktivators ID ermöglicht die Polymerisation zu hohen Molmassen bzw. relativen Viskositäten.

Der aktivierte Katalysator, insbesondere NaAA/S7000, eignet sich hervorragend für den Monomerguss (Beispiele 22-24). Dazu wurde in ein Gefäß mit einer Höhe von 300 mm und einem Durchmesser von 84 mm für 180 Minuten bei 210°C in einem Umluftofen vorgewärmt und anschließend mit einer Mischung aus LC12, NaAA und S7000 (Mol-Verhältnis Na-AA/S7000=1:0.875) ein Volumen von 1100 ccm mit Hilfe einer Dosieranlage für den Momomerguss (Fa. Dosiplast) mit dynamischem Mischkopf und einer Förderleistung von 600 ccm/min von oben gefüllt. Die Polymerisation wurde innerhalb von 120-135 min. bei einer Werkzeugtemperatur von 212 °C und einer resultierenden Produkttemperatur von 207-210 °C durchgeführt Fig. 3 (Tab. 3b).

### Beispiel 25-30: Polymerisation von LC12 mit dem Katalysatorsystem NaAA/NOP ohne Aktivator.

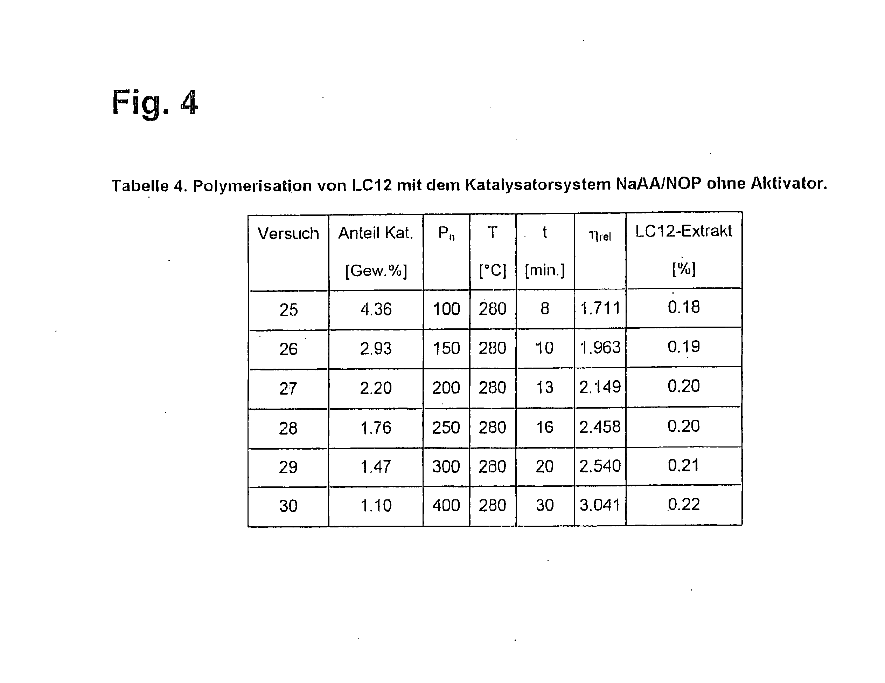

In den Beispielen 25 bis 30 in Fig. 4, Tab. 4, wurde reines NaAA in NOP bis 21 als Katalysator verwendet. Die Polymerisationen mussten daher bei höheren Temperaturen von 280 °C durchgeführt werden, da eine höhere Aktivierungsenergie nötig war. Es wurden Polymerisationsgrade von Pₙ=100-400 mittels Verhältnis Monomer/Katalysator eingestellt und man erhielt Polymerisate von farbloser bis gelblicher Farbe mit Werten für ηᵣₑₗ von 1.711 bis 3.041 und LC12-Extrakte zwischen 0.18 und 0.22 %.

### Beispiele 31-34: Polymerisation von CLa-6

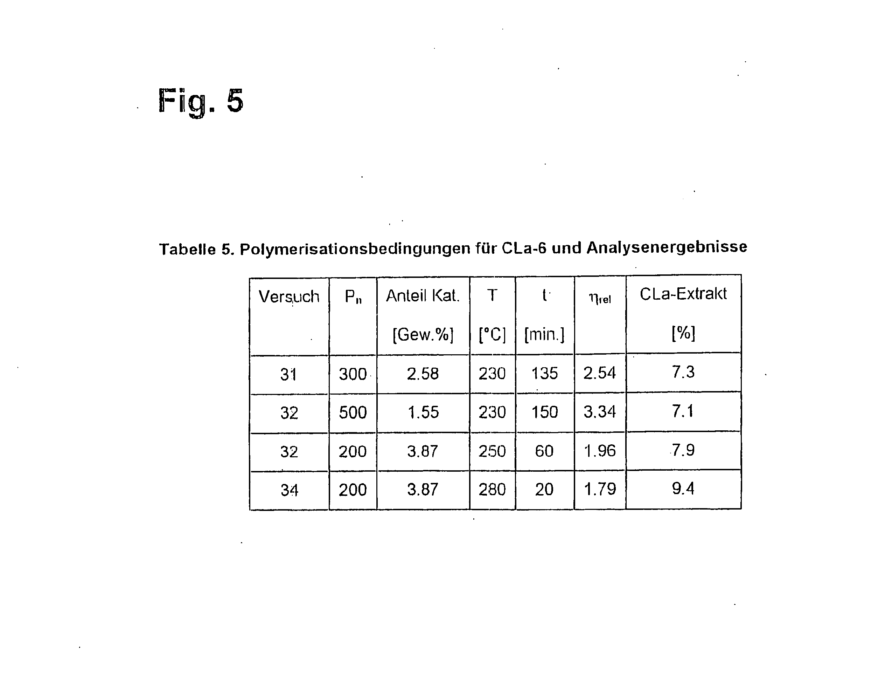

In den Beispielen 31 bis 34 in Tab. 5 (Fig. 5) wurde Caprolactam CLa-6 mit dem Katalysator NaAA in NOP polymerisiert. Der Polymerisationsgrad Pₙ wurde jeweils durch das Verhältnis Katalysator zu Monomer eingestellt und wie in den Beispielen 25-30 beschrieben polymerisiert. In Tabelle 4 wurde bei verschiedenen Pₙ von 200 bis 500 und Temperaturen von 230 bis 280 °C polymerisiert, wobei die Polymerisationsmischung bei 280 °C stark aufschäumte. Die Polymerisationsdauer t wurde so bemessen, dass die Polymerisationen vollständig, d. h. zu 100 %igem Umsatz verlaufen. Man erhielt relative Viskositäten zwischen 1.79 in Beispiel 34 und 3.34 in Beispiel 32. Die CLa-6 Extraktgehalte lagen zwischen 7.1 und 9.4 Gew.%.

### Beispiele 31: Polymerisation von Caprolacton CLo-6

Die Polymerisation von CLo-6 mit NaAA in NOP zeigte, dass die Reaktion bei erhöhten Temperaturen ausserordentlich schnell verläuft, so dass eine Durchmischung des Katalysators mit Lactonschmelze nicht möglich war. Daher wurde die Polymerisation bei Raumtemperatur durchgeführt, und man beobachtete eine schnelle, stark exotherme Reaktion. Man erhielt Polymerisate mit gelblicher Eigenfarbe.

### Beispiele 35: Synthese von KAA in NOP

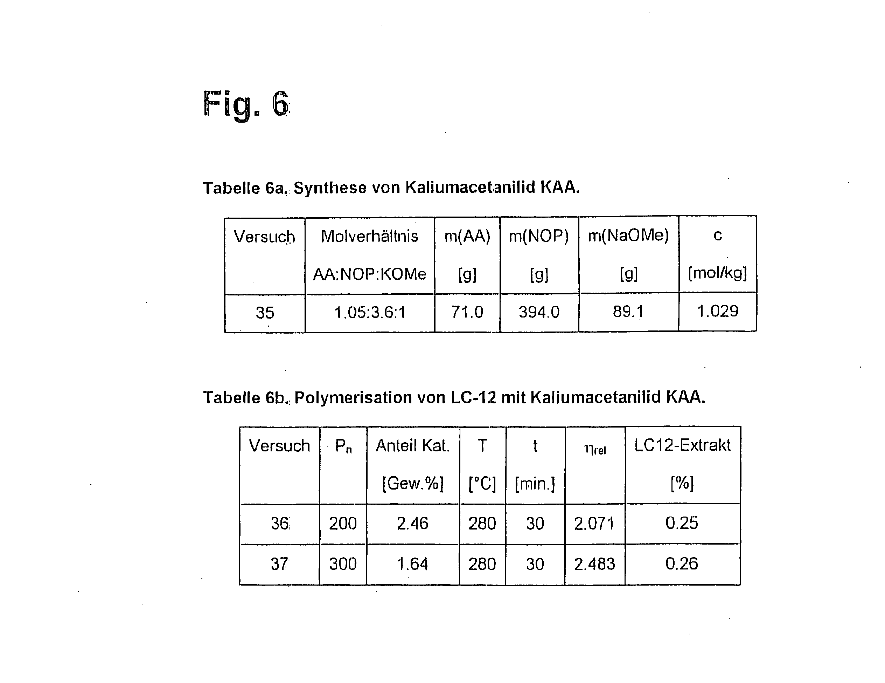

Die Synthese von KAA erfolgte analog NaAA. Unter Inertgas wurde das Acetanilid im Lösungsmittel NOP unter Rühren bei einer Sumpftemperatur von 60 °C gelöst. Anschliessend wurde Kaliummethylat KOMe (25 % Lösung in Methanol) zugetropft und gleichzeitig kontinuierlich Methanol bei 160 mbar abdestilliert. Anschliessend verringerte man das Vakuum auf 60 mbar für weitere 2 Stunden. Je nach Ansatzgrösse musste die Vakuumzeit so angepasst werden, dass das Restmethanol vollständig entfernt war. Nach dem Abkühlen auf Raumtemperatur erhielt man das deprotonierte Produkt Kaliumacetanilid KAA in NOP als klare, leicht gelbliche Lösung. Die Synthesebedingungen sind in Tabelle 6a (Fig. 6) zusammengefasst. Das Verhältnis AA:NOP:KOMe wurde 1.05:3.6:1 gewählt. Man erhielt eine Katalysatormischung mit einer Konzentration von 1.029 mol/kg.

### Beispiele 36 und 37: Polymerisation von LC-12 mit Kaliumacetanilid KAA.

In den Beispielen 36 und 37, siehe Figur 6, Tabelle 6b, wurde Laurinlactam LC-12 mit dem Katalysator KAA in NOP, polymerisiert. Der Polymerisationsgrad Pₙ wurde durch das Verhältnis Katalysator zu Monomer auf einen Wert von 200 sowie 300 eingestellt. Die Polymerisation wurde wie in den Beispielen 25-30 durchgeführt. Man erhielt Polymerisate mit ηᵣₑₗ=2.071 und 2.483 und LC12-Extrakte von 0.25 bzw. 0.26 %.

### Beispiele 38-42: Kontinuierliche Polymerisation von LC-12 mit Natriumacetanilid NaAA.

Es wurde geprüft, ob der erfindungsgemäße Katalysator für die kontinuierliche Lactam-12 Polymerisation auf einem Doppelwellenextruder geeignet ist. Dazu wurde ein Technikumextruder der Firma Werner und Pfleiderer, Stuttgart, des Typs ZSK-25 mit einer üblichen Compoundierschnecke bestückt und mit einer Bohrung in Gehäuse 2 für die kontinuierliche Dosierung des flüssigen Katalysators versehen. Danach folgen die Misch- und die Polymerisationszone mit im wesentlichen Förderelementen der Schnecke. Für den Ablauf der Polymerisation wurde der Katalysator mittels einer kontinuierlich fördernden Pumpe in die Extruderzone 2 eindosiert.

Für die Polymerisation wurde dem Extrudereinzug sorgfältig getrocknetes Lactam-12 in Pillenform entsprechend einer Durchsatzleistung von 12 kg/h zugeführt und in Zone 1 und 2 bei Temperatureinstellungen von 10 und 100 °C aufgeschmolzen. Danach wurde die Einstelltemperatur konstant bei 310 °C gehalten. Die Drehzahl der Extruderschnecken betrug jeweils 120 Umdrehungen pro Minute.

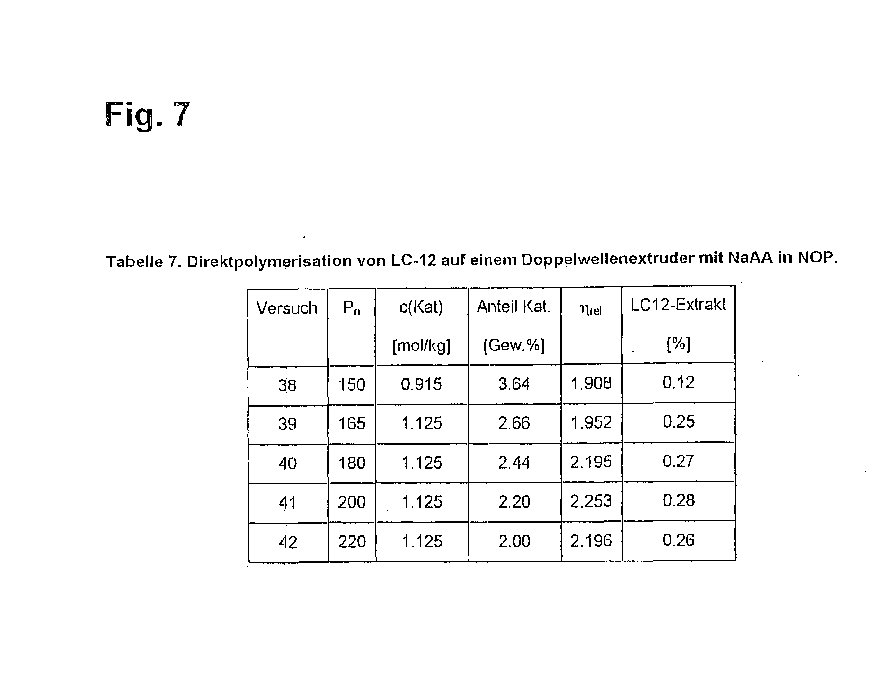

Die Ergebnisse in Fig. 7, Tab. 7 zeigen, dass der erfindungsgemäße Katalysator NaAA ausgezeichnet für die kontinuierliche Lactampolymerisation geeignet ist. Man erhält tiefe Restlactamwerte von etwa 0,2 bis 0,3 %, die deutlich unter den Werten liegen, wie sie beim üblichen Verfahren der hydrolytischen Lactampolymerisation beobachtet werden. Die relativen Viskositäten lagen für Pₙ=150-220 zwischen 1.908 und 2.196.

Es war weiterhin vorteilhaft, dass das anionisch hergestellte PA12 mit Hilfe eines Desaktivators neutralisiert wurde, da basisches PA12 beim Verarbeiten über den Schmelzezustand deutlichen Viskositätsschwankungen, insbesondere Kettenlängenabbau unterliegt. Dazu wurde das Polymer beim Compoundieren zusätzlich mit einem Desaktivator, beispielsweise Irgacore L190 der Firma Ciba SC, Basel, umgesetzt, um die mit dem Katalysator eingebrachte Basizität zu neutralisieren.

Der Mengenanteil an Desaktivator wurde stöchiometrisch berechnet, so dass eine basische Aminogruppe der Polymerkette mit einem Proton des Irgacore L190 umgesetzt wurde. Gleichzeitig wurden Additive hinzugefügt, wie Hitzestabilisatoren, Weichmacher und Schlagzähmodifikator, um das resultierende PA12 anschließend zu Rohren zu verarbeiten. Die Rohre zeigten bei den mechanischen Prüfungen ähnlich gute Werte wie das hydrolytisch polymerisierte Vergleichsmaterial.

Die Polymerisation im Extruder war mit dem aktivierten Katalysator NaAA/CyI ebenfalls sehr gut durchführbar. Dazu wurde NaAA vor der Polymerisation mit CyI im Verhältnis 1:1 vermischt und die Mischung dem Extruder zudosiert. Die Soll-Temperatur der Extrusionszonen lag zwischen 240 und 260 °C, der Durchsatz betrug 12 kg/h. Die angestrebten Polymerisationsgrade Pₙ wurden durch das Verhältnis Katalysator/Monomer in einem Bereich von 180 und 220 eingestellt, und man erhielt jeweils Restlactam-Konzentrationen von weniger als 0,3 %. Die relativen Viskositäten von 1,97 bis 2,08 und 2,13 korrelierten gut mit den Pₙ.

Die auf diese Weise hergestellten anionischen PA12-Basispolymerisate lassen sich gut mit Irgacore L190 neutralisieren und mit Additiven wie Stabilisatoren, Weichmacher und Schlagzähmodifikator, compoundieren, wobei Granulate resultieren, die sich thermoplastisch gut z. B. zu Rohren umformen lassen, welche in ihren Eigenschaften weitgehend Rohren, basiert auf hydrolytisch hergestelltem PA12, entsprechen

### Beispiel mit Vergleichsbeispiel zur Alterung von Flüssigkatalysatoren

Um die Empfindlichkeit der neu entwickelten Katalysatoren mit dem Stand der Technik, wie er in der EP 0 872 508 B1 beschrieben ist, zu vergleichen, wurde ein Versuch und ein Vergleichsversuch wie folgt durchgeführt:

Ein direkt während der Synthese aktivierter flüssiger Katalysator gemäß Stand der Technik (Katalysator LA4 nach der EP 0 872 508 B1), enthaltend in molarem Verhältnis die Komponenten Natriumcaprolactamat zu DCC zu Diemethylpropylenharnstoff (DMPU) entsprechend 1,05:1:4,15 und ein erfindungsgemäßer, flüssiger Katalysator gemäß Beispiel 2 wurden vergleichend auf ihre Empfindlichkeit bei Luftzutritt überprüft. Dazu wurden je 30 g der Katalysatoren in einen 250 ml Erlenmeyerkolben eingewogen und bei 23 °C und 55 % relativer Feuchte gelagert. Nun erfolgte stündliche Beurteilung mit folgendem Ergebnis:

Der Katalysator gemäß Stand der Technik zeigte bereits nach einer Stunde Lagerung Bildung einer feinen Haut, die sich zunächst durch Schwenken des Erlenmeyerkolbens gut in die verbliebene Lösung einmischen ließ. Die oberflächliche Krustenbildung verstärkte sich nun stündlich, so dass die entstandenen Feststoffanteile bald nicht mehr löslich waren. Dies war spätestens nach 5 bis 6 Stunden bei allen Proben der Fall.

Der erfindungsgemäße Katalysator dagegen zeigte erst nach 5 Stunden erste Anzeichen von Hautbildung und erst nach 23 Stunden erste, aber immer noch kleine, nicht mehr lösliche Feststoffanteile, die die Lösung leicht trübe aussehen ließen.

Nach 24 Stunden Lagerung wurde ein Funktionstest in Form einer Batch-Polymerisation durchgeführt:

Bei dem Katalysator LA4 erschwerten der hohe Feststoffanteil sowie die erhöhte Viskosität die Probennahme aus dem verbliebenen Flüssiganteil. Die Polymerisation wurde durch Zugabe von 2,2 Gew.-% LA-4 zur auf 200 °C erwärmten Lactam-12 Schmelze ausgelöst. Die Tu-Zeit betrug 150 Sekunden.

Zugabe derselben molaren Menge an erfindungsgemäßem Katalysator den man zuvor in molarem 1:1-Verhältnis mit Cyclohexylisocyanat aktiviert hatte, löste die Polymerisation von Lactam-12 bei nur 170 °C nach 76 Sekunden (Tu-Zeit) aus. Die Entnahme der erfindungsgemäßen Katalysatorlösung bereitete auch nach 24 Stunden Lagerung in einer feuchten Umgebung keine Probleme und zudem war die Reaktivität noch nahezu vollständig vorhanden.

Für die Lagerung und die Verwendung der Katalysatoren ist es entscheidend, dass sie gut lagerfähig und nur wenig luft- und feuchteempfindlich sind, was bei den erfindungsgemäßen Katalysatoren hervorragend der Fall ist.

## Patentansprüche

1. Katalysatorlösung zur Durchführung der anionischen Polymerisation von Lactonen und/oder Lactamen, enthaltend ein in einem aprotischen Solvatisierungsmittel S, ausgewählt aus N-Methylpyrrolidon, N-Octyl-pyrrolidon, N-Cyclohexylpyrrolidon, N-Octyl-caprolactam, Tetrabutylharnstoff oder Mischungen hiervon, gelöstes Salz mindestens einer Verbindung der allgemeinen Formel I 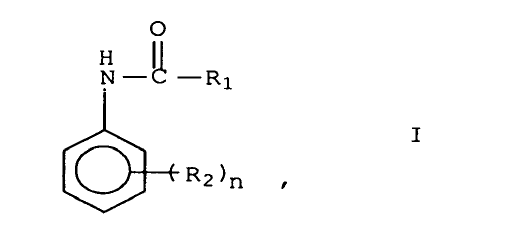 worin R₁ H, ein aliphatischer, cycloaliphatischer oder aromatischer Rest mit 1 bis 12 C-Atomen, der keine Heteroatome oder Heterogruppen aufweist, ist, der Rest R₂, der gleich oder verschieden sein kann, ausgewählt ist aus H, Halogen, C₁-C₅-Alkyl, Ethoxy und Methoxy, n=1, 2 oder 3 ist und die Lösung in einer molaren Konzentration von 0,3 bis 3,0 mol/kg vorliegt.

2. Katalysatorlösung nach Anspruch 1, **dadurch gekennzeichnet, dass** in der allgemeinen Formel I R₁ = CH₃ und R₂ = H ist.

3. Katalysatorlösung nach mindestens einem der Ansprüche 1 bis 2, **dadurch gekennzeichnet, dass** das Salz ein Natrium- oder Kaliumsalz ist.

4. Verfahren zur Herstellung einer Katalysatorlösung nach mindestens einem der Ansprüche 1 bis 3, **dadurch gekennzeichnet, dass** die Verbindung der allgemeinen Formel I im Solvatisierungsmittel (S) unter Hinzufügung einer Base (B) deprotoniert wird.

5. Verfahren nach Anspruch 4, **dadurch gekennzeichnet, dass** die Base ausgewählt ist aus Natrium, Natriumhydrid, Natriumalkoholat, insbesondere Methylat, Natriumamid, Natriumhydroxid und/oder Natriumcarbonat.

6. Verfahren nach Anspruch 5, **dadurch gekennzeichnet, dass** als Base eine 15 bis 40%ige, bevorzugt 30%ige Lösung von Natriumethylat in Methanol verwendet wird und die Deprotonierung bei 30 bis 130° C, bevorzugt bei 50 bis 70° C, durchgeführt wird.

7. Verfahren nach Anspruch 4, **dadurch gekennzeichnet, dass** die Lösung durch Lösen eines festen Salzes der Verbindung der allgemeinen Formel I im Solvatisierungsmittel S hergestellt wird.

8. Verwendung der Katalysatorlösung nach einem der Ansprüche 1 bis 3, zur direkten Herstellung von Gebrauchsgegenständen aus Polylactam in einem diskontinuierlichen oder kontinuierlichen Prozess der Art Monomerguss, Extrusion, Schleuderguss, Spritzguss, Rotationsguss, Pultrusions-, Tauch- und Sprühverfahren, wobei die Katalysatorlösung jeweils der Lactamschmelze zugefügt ist.

## Claims

1. Catalyst solution for the anionic polymerization of lactones and/or lactams, comprising a salt of at least one compound of the general formula I 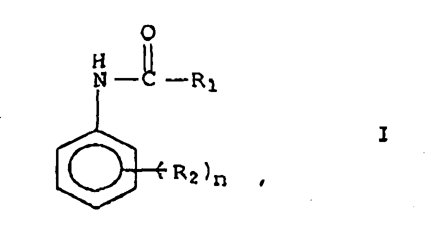 where R₁ is H or an aliphatic, cycloaliphatic or aromatic radical with 1 to 12 C atoms which comprises no heteroatoms or hetero groups, the radical R₂, which is the same or different, is selected from H, halogen, C₁-C₅-alkyl, ethoxy and methoxy, n = 1, 2 or 3, the salt being dissolved in an aprotic solvation agent S selected from N-methylpyrrolidone, N-octylpyrrolidone, N-cyclohexylpyrrolidone, N-octylcaprolactam, tetrabutyl-urea or mixtures thereof and the solution being present in a molar concentration of 0.3 to 3.0 mol/kg.

2. Catalyst solution according to Claim 1, **characterized in that** R₁ = CH₃ and R₂ = H in the general formula I.

3. Catalyst solution according to at least one of the Claims 1 to 2, **characterized in that** the salt is a sodium or potassium salt.

4. Method for producing a catalyst solution according to at least one of the Claims 1 to 3, **characterized in that** the compound of the general formula I is deprotonated in the solvation agent (S) by adding a base (B).

5. Method according to Claim 4, **characterized in that** the base is selected from sodium, sodium hydride, sodium alkoxide, in particular methoxide, sodium amide, sodium hydroxide and/or sodium carbonate.

6. Method according to Claim 5, **characterized in that** the base used is a 15 to 40%, preferably 30%, solution of sodium methoxide in methanol and the deprotonation is carried out at 30 to 130°C, preferably at 50 to 70°C.

7. Method according to Claim 4, **characterized in that** the solution is prepared by dissolving a solid salt of the compound of the general formula I in the solvation agent S.

8. Use of the catalyst solution according to any one of the Claims 1 to 3 for direct production of articles of daily use from polylactam in a batch or continuous operation selected from monomer casting, extrusion, centrifugal casting, injection moulding, rotational casting and pultrusion, dipping and spraying processes, the catalyst solution being added to the lactam melt in each case.

## Revendications

1. Solution de catalyseur pour effectuer la polymérisation anionique de lactones et/ou de lactames, contenant un sel dissous dans un milieu de solvatation aprotique S, choisi parmi la N-méthylpyrrolidone, la N-octylpyrrolidone, la N-cyclohexylpyrrolidone, le N-octylcaprolactame, la tétrabutylurée et leurs mélanges, d'au moins un composé de formule générale I 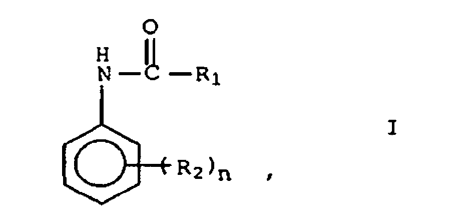 dans laquelle R₁ est l'hydrogène, un radical aliphatique, cycloaliphatique ou aromatique ayant 1 à 12 atomes de carbone qui ne présente pas d'hétéroatomes ou de groupements hétéroatomiques, le radical R₂, qui peut être identique ou différent, est choisi parmi hydrogène, halogène, alkyle en C₁-C₅, éthoxy et méthoxy, n=1, 2 ou 3, et la solution est présente à une concentration molaire de 0,3 à 3,0 moles/kg.

2. Solution de catalyseur selon la revendication 1, **caractérisée en ce que** R₁ = CH₃ et R₂ = H dans la formule générale I.

3. Solution de catalyseur selon au moins l'une quelconque des revendications 1 à 2, **caractérisée en ce que** le sel est un sel de sodium ou de potassium.

4. Procédé de fabrication d'une solution de catalyseur selon au moins l'une quelconque des revendications 1 à 3, **caractérisé en ce que** le composé de formule générale I est déprotoné dans le milieu de solvatation (S) par addition d'une base (B).

5. Procédé selon la revendication 4, **caractérisé en ce que** la base est choisie parmi le sodium, l'hydrure de sodium, un alcoolate de sodium, en particulier le méthylate, l'amidure de sodium, l'hydroxyde de sodium et/ou le carbonate de sodium.

6. Procédé selon la revendication 5, **caractérisé en ce que** l'on utilise comme base une solution à 15%, jusqu'à 40%, de préférence à 30%, d'éthylate de sodium dans du méthanol et que l'on effectue la déprotonation à une température dans la plage de 30 à 130°C, de préférence de 50 à 70°C.

7. Procédé selon la revendication 4, **caractérisé en ce que** la solution est fabriquée par dissolution d'un sel solide du composé de formule générale I dans le milieu de solvatation S.

8. Utilisation de la solution de catalyseur selon l'une quelconque des revendications 1 à 3 pour la fabrication directe d'objets utilitaires en polylactame selon un procédé discontinu ou continu de type coulage de monomères, extrusion, moulage par centrifugation, moulage par injection, moulage par rotation, procédé de pultrusion, d'immersion et de pulvérisation, la solution de catalyseur étant respectivement ajoutée à la masse fondue de lactame.
